# EUROPÄISCHE PATENTSCHRIFT

(11) **EP 2 697 094 B1**
(45) Veröffentlichungstag und Bekanntmachung des Hinweises auf die Patenterteilung: **16.09.2015**
(21) Anmeldenummer: 12704273.7
(22) Anmeldetag: 15.02.2012
(51) Int. Cl.: B60L 3/06, B60L 3/12, G01K 7/42, H01L 27/02, H02M 1/32

(54) **STEUEREINRICHTUNG UND VERFAHREN ZUM BETRIEB EINER DURCH EINEN WECHSELRICHTER ANGESTEUERTEN ELEKTRISCHEN MASCHINE**
CONTROL DEVICE AND METHOD FOR OPERATING AN ELECTRICAL MACHINE DRIVEN BY AN INVERTER
DISPOSITIF DE COMMANDE ET PROCÉDÉ DE FONCTIONNEMENT D'UNE MACHINE ÉLECTRIQUE COMMANDÉE PAR UN ONDULEUR

(30) Priorität: 15.04.2011 DE 102011007491
(43) Veröffentlichungstag der Anmeldung: 19.02.2014
(73) Patentinhaber: Robert Bosch GmbH, 70442 Stuttgart (DE)
(72) Erfinder: HEIDRICH, Torsten, 71665 Vaihingen/Enz (DE); HIRSCH, Michele, 73730 Esslingen (DE); KRETSCHMER, Markus, 71711 Murr (DE); GAAB, Stefan, 36251 Bad Hersfeld (DE); DJONGA, Christian, 74072 Heilbronn (DE); WERNER, Tobias, 70736 Fellbach (DE); HEEB, Michael, 70197 Stuttgart (DE)
(86) Internationale Anmeldenummer: PCT/EP2012/052566
(87) Internationale Veröffentlichungsnummer: WO 2012/139792

(56) Entgegenhaltungen:
- DE-A1-102006 001 874
- DE-A1-102008 026 541
- US-A1- 2005 204 761
- US-A1- 2009 072 770
- US-A1- 2009 276 165

## Beschreibung

Die Erfindung betrifft eine Steuereinrichtung und ein Verfahren zum Betrieb einer durch einen Wechselrichter angesteuerten elektrischen Maschine.

### Stand der Technik

Für den Antrieb in Hybrid- oder Elektrofahrzeugen werden in der Regel elektrische Maschinen in Form von Drehfeldmaschinen eingesetzt, welche in Verbindung mit Wechselrichtern -häufig auch als Inverter bezeichnet - betrieben werden. Die elektrischen Maschinen werden dabei wahlweise im Motor- oder Generatorbetrieb betrieben. Im Motorbetrieb erzeugt die elektrische Maschine ein Antriebsmoment, welches beim Einsatz in einem Hybridfahrzeug einen Verbrennungsmotor, zum Beispiel in einer Beschleunigungsphase, unterstützt. Im Generatorbetrieb erzeugt die elektrische Maschine elektrische Energie, die in einem Energiespeicher, wie zum Beispiel einer Batterie oder einem Super-Cab gespeichert wird. Betriebsart und Leistung der elektrischen Maschine werden über den Wechselrichter eingestellt.

Bekannte Wechselrichter umfassen eine Reihe von Schaltelementen, mit denen die einzelnen Phasen der elektrischen Maschine wahlweise gegen ein hohes Versorgungsspannungspotential oder gegen ein niedriges Versorgungsspannungspotential geschaltet werden. Dabei bilden jeweils zwei in Reihe geschaltete Schaltelemente einen Halbbrückenzweig, wobei ein erstes Schaltelement mit dem hohen Versorgungsspannungspotential und ein zweites Schaltelement mit dem niedrigen Versorgungsspannungspotential verbunden sind. Jede Phase der elektrischen Maschine ist dann mit jeweils einem Halbbrückenzweig verbunden. Die Schaltelemente werden von einer externen Steuereinheit angesteuert, welche in Abhängigkeit vom Fahrerwunsch (Beschleunigen oder Bremsen) einen Soll-Betriebspunkt für die elektrische Maschine berechnet. Der Wechselrichter ist mit der Steuereinheit verbunden und erhält von diesem die entsprechenden Betriebsdaten bzw. Steuerbefehle.

Bei elektrischen Maschinen, welche über einen Wechselrichter gesteuert werden, sind die Halbleiter-Leistungsbauelemente des Wechselrichters - im folgenden kurz als Leistungsbauelemente bezeichnet - vor allem im Betrieb mit hohen Strömen bei kleinen Drehzahlen einer hohen thermischen Belastung ausgesetzt. So müssen z.B. Elektrofahrzeuge oder Hybridfahrzeuge im rein elektrischen Färbetrieb ausschließlich mit Hilfe der elektrischen Maschine anfahren können. Ist die elektrische Maschine dabei ohne ein drehzahlausgleichendes Koppelelement, wie z.B. einen Drehmomentwandler oder eine Reibkupplung, mit dem Antrieb und damit den Rädern des Fahrzeuges verbunden, so muss die elektrische Maschine das notwendige Anfahrmoment ab einer Drehzahl von "Null" bereitstellen. Besonders hohe Anfahrmomente sind z.B. an steilen Anstiegen oder auch an Bordsteinkanten notwendig.

Ist die elektrische Maschine z.B. als Synchronmaschine ausgeführt, so ist das momenterzeugende Feld im Stator direkt mit der Drehzahl der Maschine gekoppelt. Dadurch bewegt sich das elektrische Feld bei Drehzahl Null gar nicht oder bei kleinen Drehzahlen nur sehr langsam, das hat aber zur Folge, dass der das Feld erzeugende Wechselrichters den erforderlichen Strom für eine längere Zeit mit den gleichen Leistungsbauelementen zur Verfügung stellen muss. Die Belastung der Leistungsbauelemente des Wechselrichters ist demzufolge in diesem Betriebsbereich nicht gleichmäßig, so dass an den Leistungsbauelementen unterschiedliche Temperaturen auftreten. Bei höheren Drehzahlen treten dagegen kaum Temperaturunterschiede auf, da die thermischen Zeitkonstanten erheblich größer sind als die Kommutierungszeiten der Leistungsbauelemente.

Da die auftretenden Temperaturhübe an den Leistungsbauelementen des Wechselrichters die Lebensdauer dieser Bauelemente entscheidend beeinflussen, muss der Temperaturhub in den Leistungsbauelementen begrenzt werden. Dazu wird bei Erreichen eines Grenzwertes für den Temperaturhub der Strom zur Erzeugung des momentenerzeugenden Feldes reduziert und damit das Drehmoment oder die Leistung der elektrischen Maschine begrenzt.

Aus der EP 1 768 238 A1 ist ein Verfahren zur Begrenzung der Temperatur einer Endstufe eines Elektromotors bekannt, bei dem die Temperatur von wenigsten einem in der Endstufe enthaltenen Brückenbauteil dadurch ermittelt wird, dass der durch das Brückenbauteil fließende Phasenstrom gemessen, aus dem Phasenstrom die Verlustleistung des Brückenbauteils berechnet, aus der Verlustleistung die sich an dem Brückenbauteil ergebende Temperaturerhöhung ermittelt und zu der Temperaturerhöhung die Temperatur einer Grundplatte der Endstufe addiert wird. Wenn die ermittelte Temperatur des Brückenbauteils eine bestimmte Maximaltemperatur überschreitet, wird das Abgabemoment des Elektromotors reduziert.

Die Druckschrift US 2009/0072770 A1 offenbart ein Verfahren zur Begrenzung der Betriebstemperatur eines Motors durch Vergleich zwischen einer Temperaturreferenz eines Leistungshalbleiterschalters und der gemessenen Temperatur des Leistungshalbleiterschalters. Die Druckschrift US 2009/0276165 A1 offenbart ein Motorsteuergerät, welches den Alterungsfortschritt eines Leistungsmoduls auf der Basis von einer mittleren Betriebstemperatur und Temperaturänderungen im Betrieb ermittelt. Die Druckschrift US 2005/0204761 A1 offenbart ein Temperaturmessgerät, welches die Temperatur von Halbleitermodulen ermittelt.

### Offenbarung der Erfindung

Die vorliegende Erfindung schafft ein Verfahren nach Anspruch 1 zum Betrieb einer durch einen Wechselrichter angesteuerten n-phasigen elektrischen Maschine, mit n ≥ 1, wobei der Wechselrichter n Halbbrückenzweige mit Leistungsbauelementen in Form von steuerbaren Leistungs-Schaltelementen und dazu jeweils parallel geschalteten Leistungsdioden umfasst, wobei jeder der Halbbrückenzweige auf einem separaten Halbleiter-Modul angeordnet ist, welche gemeinsam auf einer Grundplatte angeordnet sind. Zumindest für einen Drehzahlbereich der elektrischen Maschine unterhalb eines vorgebbaren Drehzahlschwellenwertes werden die durch die Halbbrückenzweige fließenden Phasenströme, die an den Leistungsbauelementen anliegenden Spannungen und Temperaturen auf den Halbleiter-Modulen ermittelt. Aus dem an einem Leistungsbauelement jeweils fließenden Strom und der jeweils anliegenden Spannung wird für jedes der Leistungsbauelemente eine Verlustleistung berechnet. Aus den Verlustleistungen werden anschließend an den jeweiligen Leistungs-Schaltelementen mit Hilfe von ersten Übertragungsfunktionen Temperaturhübe an allen Leistungs-Schaltelementen sowie aus den Verlustleistungen an den jeweiligen Leistungs-Schaltelementen mit Hilfe von zweiten Übertragungsfunktionen ein jeweiliger Temperaturhub für Temperatursensoren, welche der Ermittlung der Temperaturen auf den Halbleiter-Modulen dienen, ermittelt. Dann wird aus den ermittelten Temperaturen auf den Halbleiter-Modulen und den ermittelten Temperaturhüben an den Temperatursensoren eine Temperatur der Grundplatte ermittelt und schließlich ein Drehmoment oder eine Leistung der elektrischen Maschine in Abhängigkeit von den ermittelten Temperaturhüben und der ermittelten Temperatur der Grundplatte festgelegt.

Gemäß einer weiteren Ausführungsform schafft die Erfindung eine Steuereinrichtung nach Anspruch 9 für den Betrieb einer durch einen Wechselrichter gesteuerten n-phasigen elektrischen Maschine, mit n ≥ 1, wobei der Wechselrichter n Halbbrückenzweige mit Leistungsbauelementen in Form von steuerbaren Leistungs-Schaltelementen und dazu jeweils parallel geschalteten Leistungsdioden umfasst, wobei jeder der Halbbrückenzweige auf einem separaten Halbleiter-Modul angeordnet ist, welche gemeinsam auf einer Grundplatte angeordnet sind, mit einer Erfassungseinrichtung, welche dazu ausgelegt ist, zumindest für einen Drehzahlbereich der elektrischen Maschine unterhalb eines vorgebbaren Drehzahlschwellenwertes die durch die Halbbrückenzweige fließenden Phasenströme und die an den Leistungsbauelementen anliegenden Spannungen und Temperaturen auf den Halbleiter-Modulen zu ermitteln, einer ersten Berechnungseinrichtung, welche dazu ausgelegt ist, aus dem an einem Leistungsbauelement jeweils fließenden Phasenstrom und der jeweils anliegenden Spannung eine Verlustleistung für jedes der Leistungsbauelemente zu berechnen, einer zweiten Berechnungseinrichtung, welche dazu ausgelegt ist, aus den Verlustleistungen an den jeweiligen Leistungs-Schaltelementen mit Hilfe von ersten Übertragungsfunktionen Temperaturhübe an allen Leistungs-Schaltelementen zu ermitteln sowie aus den Verlustleistungen an den jeweiligen Leistungs-Schaltelementen mit Hilfe von zweiten Übertragungsfunktionen einen jeweiligen Temperaturhub für Temperatursensoren, welche der Ermittlung der Temperaturen auf den Halbleiter-Modulen dienen, zu ermitteln, einer dritten Berechnungseinrichtung, welche dazu ausgelegt ist, aus den ermittelten Temperaturen auf den Halbleiter-Modulen und den ermittelten Temperaturhüben an den Temperatursensoren eine Temperatur der Grundplatte zu ermitteln, und einer vierten Berechnungseinrichtung, welche dazu ausgelegt ist, ein Drehmoment oder eine Leistung der elektrischen Maschine in Abhängigkeit von den ermittelten Temperaturhüben und der ermittelten Temperatur der Grundplatte festzulegen.

Gemäß einer weiteren Ausführungsform schafft die Erfindung ein System nach Anspruch 10, mit einer erfindungsgemäßen Steuereinrichtung, einem Wechselrichter mit n Halbbrückenzweigen mit Leistungsbauelementen in Form von steuerbaren Leistungs-Schaltelementen und dazu jeweils parallel geschalteten Leistungsdioden, wobei jeder der Halbbrückenzweige auf einem separaten Halbleiter-Modul angeordnet ist, welche gemeinsam auf einer Grundplatte angeordnet sind, und einer durch den Wechselrichter gesteuerten n-phasigen elektrischen Maschine, mit n ≥ 1.

### Vorteile der Erfindung

Die erfindungsgemäße Vorrichtung basiert auf der Grundidee, den jeweiligen Temperaturhub für jedes der Leistungsbauelemente des Wechselrichters mit einfachen Mitteln auf Basis von vorhandenen Betriebsgrößen zu ermitteln, so dass eine Begrenzung des Stromes und damit des Drehmomentes oder der Leistung der elektrischen Maschine ohne Beeinträchtigung der Lebensdauer der Leistungsbauelemente auf Betriebsfälle beschränkt werden kann, in welchen eine reale Gefährdung oder negative Beeinflussung der Lebensdauer eines Leistungsbauelementes auftritt. Dabei wird vorteilhaft auch jede Belastungsänderung an den Leistungsbauelementen mit berücksichtigt. So kann durch kleinste Drehungen der elektrischen Maschine, bei welchen auf andere Leistungsbauelemente umkommutiert oder umgeschaltet wird, das Drehmoment ohne Reduktion länger bereitgestellt werden ohne dabei einen maximal zulässigen Temperaturhub an den Leistungsbauelementen zu überschreiten. Auf diese Weise kann beispielsweise die Anfahrfähigkeit von Fahrzeugen mit elektrischem Antrieb erheblich verbessert werden, da auch bei kleinen Drehzahlen der elektrischen Maschine ein ausreichendes Anfahrmoment zur Verfügung gestellt werden kann. Dies ist insbesondere bei Anfahrvorgängen an Steigungen hilfreich, da dort besonders hohe Anfahrmomente erforderlich sind. Eine "vorsorgliche" Reduzierung des Drehmomentes oder der Leistung ist nicht mehr erforderlich.

Bei dem erfindungsgemäßen Verfahren werden die aktuellen Verlustleistungen für jedes einzelne Leistungsbauelement, also Leistungs-Schaltelemente und Leistungsdioden, auf Basis der anliegenden Ströme und Spannungen ermittelt, so dass aus den jeweiligen Verlustleistungen die Temperaturhübe in jedem einzelnen Leistungsbauelement anhand einer jeweiligen Übertragungsfunktion nachgebildet werden können. Dabei werden auch die thermischen Abhängigkeiten zwischen den Leistungsbauelementen und den Temperatursensoren, welche die Temperaturen auf den Halbleitermodulen messen, aus den Verlustleistungen anhand einer Übertragungsfunktion nachgebildet, so dass auch die Temperatur der Grundplatte oder Kühlerplatte in ausreichendem Maße berücksichtigt werden kann.

Da merkliche Temperaturunterschiede zwischen den einzelnen Leistungsbauelementen des Wechselrichters im Wesentlichen nur bei kleinen Drehzahlen auftreten, ist es ausreichend das erfindungsgemäße Verfahren in einem Drehzahlbereich der elektrischen Maschine unterhalb eines vorgebbaren Drehzahlschwellenwertes anzuwenden. Das erfindungsgemäße Verfahren kann grundsätzlich aber unabhängig von der Drehzahl der elektrischen Maschine angewendet werden.

Um den unterschiedlichen thermischen Belastbarkeiten von Leistungs-Schaltelementen und Leistungsdioden Rechnung tragen zu können, ist es gemäß einer Ausführungsform der Erfindung vorgesehen, dass aus den ermittelten Temperaturhüben an den Leistungs-Schaltelementen ein maximaler Temperaturhub an den Leistungs-Schaltelementen ermittelt wird, aus den ermittelten Temperaturhüben (Δt) an den Leistungsdioden ein maximaler Temperaturhub an den Leistungsdioden ermittelt wird und das Drehmoment oder die Leistung der elektrischen Maschine in Abhängigkeit von den ermittelten maximalen Temperaturhüben an den Leistungs-Schaltelementen und den Leistungsdioden festgelegt wird.

Neben den auftretenden Temperaturhüben haben auch die Absoluttemperaturen an den Leistungsbauelementen Einfluss auf deren Lebensdauer. Daher ist es gemäß einer Ausführungsform der Erfindung vorgesehen, aus der ermittelten Temperatur der Grundplatte und den ermittelten maximalen Temperaturhüben an den Leistungs-Schaltelementen und den Leistungsdioden einen Maximalwert einer absoluten Temperatur der Leistungs-Schaltelemente bzw. einen Maximalwert einer absoluten Temperatur der Leistungsdioden zu ermitteln und das Drehmoment oder die Leistung der elektrischen Maschine auch in Abhängigkeit von den ermittelten Maximalwerten der absoluten Temperaturen an den Leistungs-Schaltelementen und den Leistungsdioden festzulegen.

Gemäß einer weiteren Ausführungsform der Erfindung wird zur Ermittlung der Temperatur der Grundplatte der für den Temperatursensor auf einem Halbleitermodul ermittelte Temperaturhub von der durch den Temperatursensor auf einem Halbleitermodul erfassten Temperatur subtrahiert. Aus den auf diese Weise ermittelten Temperaturwerten wird dann durch Mittelwertbildung die Temperatur der Grundplatte ermittelt. Auf diese Weise werden unter anderem auch Messungenauigkeiten der Temperatursensoren ausgeglichen.

Gemäß einer Ausführungsform der Erfindung wird der Temperaturhub an einem Temperatursensor auf einem Halbleitermodul aus den Verlustleistungen zumindest eines Leistungsbauelementes auf diesem Halbleitermodul mit Hilfe mindestens einer Übertragungsfunktion ermittelt. Da je nach Anordnung des Temperatursensors auf dem Halbleitermodul nicht alle Leistungsbauelemente den Temperaturhub am Temperatursensor beeinflussen, kann es zur Reduzierung des Rechenaufwandes vorgesehen sein, dass nur die Verlustleistungen derjenigen Leistungsbauelemente berücksichtigt werden, welche einen thermischen Einfluss auf den Temperatursensor haben.

Da die Leistungsbauelemente je nach Anordnung des Temperatursensors auf dem Halbleitermodul unterschiedlichen Einfluss auf den Temperaturhub am Temperatursensor haben, sieht eine weitere Ausführungsform der Erfindung vor, dass aus den Verlustleistungen der einzelnen Leistungsbauelemente mit Hilfe jeweils zugeordneter und voneinander verschiedener Übertragungsfunktionen jeweils Temperaturhub-Anteile ermittelt werden. Der Temperaturhub an einem Temperatursensor wird dann durch Summenbildung der einzelnen Temperaturhub-Anteile ermittelt.

Um eine dauerhafte Beschädigung und/oder negative Beeinflussung der Lebensdauer der Leistungsbauelemente des Wechselrichters zu vermeiden, kann das Drehmoment oder die Leistung der elektrischen Maschine auf einen vorgebbaren Maximalwert begrenzt werden, wenn die ermittelten Temperaturhübe und/oder die ermittelten absoluten Temperaturwerte vorgebbare Grenzwerte überschreiten.

Weitere Merkmale und Vorteile von Ausführungsformen der Erfindung ergeben sich aus der nachfolgenden Beschreibung mit Bezug auf die beigefügten Figuren.

### Kurze Beschreibung der Figuren

Es zeigen:
- Figur 1: ein schematisches Blockschaltbild einer durch einen Wechselrichter gesteuerten elektrischen Maschine;
- Figur 2: eine schematisches Blockdiagramm einer Steuereinrichtung zur Durchführung des erfindungsgemäßen Verfahrens zum Betrieb einer durch einen Wechselrichter gesteuerten elektrischen Maschine; und
- Figur 3: eine schematische Darstellung einer Steuereinrichtung zur Ansteuerung eines Wechselrichters zum Betrieb einer elektrischen Maschine.

### Beschreibung der Ausführungsbeispiele

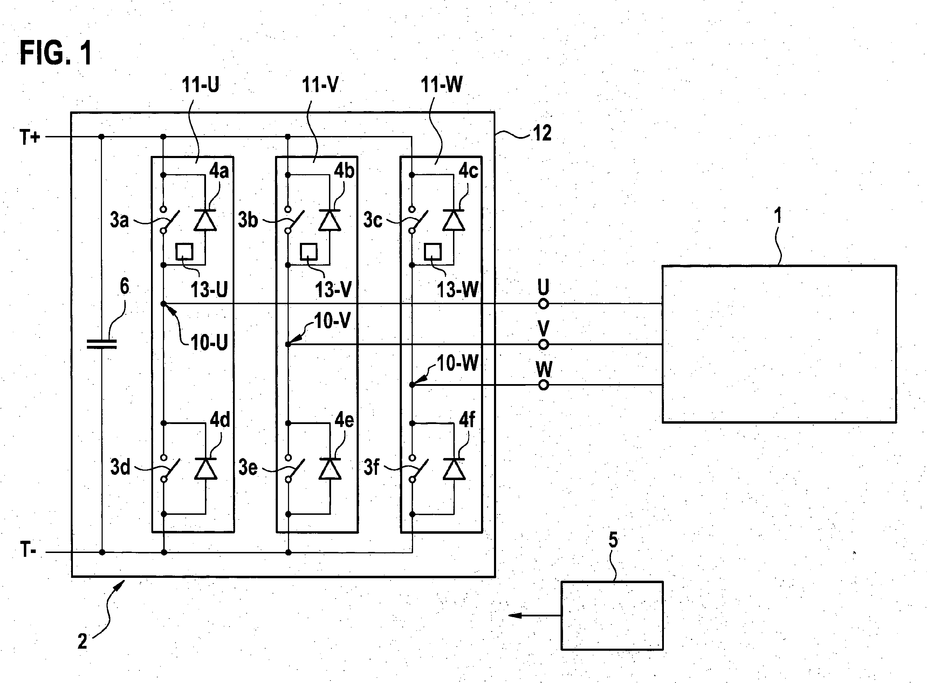

Figur 1 zeigt eine schematische Darstellung einer dreiphasigen elektrischen Maschine 1, welche beispielsweise als Synchron-, Asynchron- oder Reluktanz-Maschine ausgeführt sein kann, mit einem daran angeschlossenen Wechselrichter 2. Der Wechselrichter 2 umfasst Leistungs-Schaltelemente 3a-3f in Form von Leistungsschaltern, welche mit einzelnen Phasen U, V, W der elektrischen Maschine 1 verbunden sind und die Phasen U, V, W entweder gegen ein hohes Versorgungsspannungspotential T+ oder ein niedriges Versorgungsspannungspotential T- schalten. Die mit dem hohen Versorgungsspannungspotential T+ verbundenen Leistungs-Schaltelemente 3a-3c werden dabei auch als "High-SideSchalter" und die mit dem niedrigen Versorgungsspannungspotential T- verbundenen Leistungs-Schaltelemente 3d-3f als "Low-Side-Schalter" bezeichnet und können beispielsweise als Insulated Gate Bipolar Transistor (IGBT) oder als Metal Oxide Semiconductor Field-Effect Transistor (MOSFET) ausgeführt sein. Der Wechselrichter 2 umfasst ferner mehrere Freilaufdioden in Form von Leistungsdioden 4a-4f, welche jeweils parallel zu einem der Schaltelemente 3a-3f angeordnet sind. Die Schaltelemente 3a und 3d, 3b und 3e sowie 3c und 3f bilden dabei zusammen mit den jeweils zugeordneten Leistungsdioden 4a-4f jeweils einen Halbbrückenzweig 10-U, 10-V bzw. 10-W, welche jeweils einer der Phasen U, V, W der elektrischen Maschine 1 zugeordnet sind.

Die Halbbrückenzweige 10-U, 10-V und 10-W sind jeweils auf einem separaten Halbleiter-Modul 11-U bzw. 11-V bzw. 11-W angeordnet. Die Halbleiter-Modul 11-U, 11-V und 11-W wiederum sind auf einer gemeinsamen Grundplatte 12 angeordnet, welche unter anderem auch die Funktion einer Kühlplatte für die Leistungsbauelemente übernimmt. Auf jedem der Halbleiter-Module 11-U, 11-V und 11-W ist jeweils mindestens ein Temperatursensor 13-U bzw. 13-V bzw. 13-W angeordnet, mit deren Hilfe die Temperatur auf dem jeweiligen Halbleitermodul 11-U bzw. 11-V bzw. 11-W gemessen werden kann.

Der Wechselrichter 2 bestimmt Leistung und Betriebsart der elektrischen Maschine 1 und wird von einer lediglich schematisch dargestellten ersten Steuereinheit 5, welche auch in den Wechselrichter 2 integriert sein kann, entsprechend angesteuert. Die elektrische Maschine 1 kann dabei wahlweise im Motor- oder Generatorbetrieb betrieben werden.

Parallel zum Pulswechselrichter 2 ist ein so genannter Zwischenkreis-Kondensator 6 angeordnet, welcher auch in den Pulswechselrichter 2 integriert sein kann und welcher im Wesentlichen zur Stabilisierung der Zwischenkreis-Spannung im Pulswechselrichter 2 dient.

Die elektrische Maschine 1 ist im dargestellten Ausführungsbeispiel dreiphasig ausgeführt, kann aber auch weniger oder mehr als drei Phasen aufweisen.

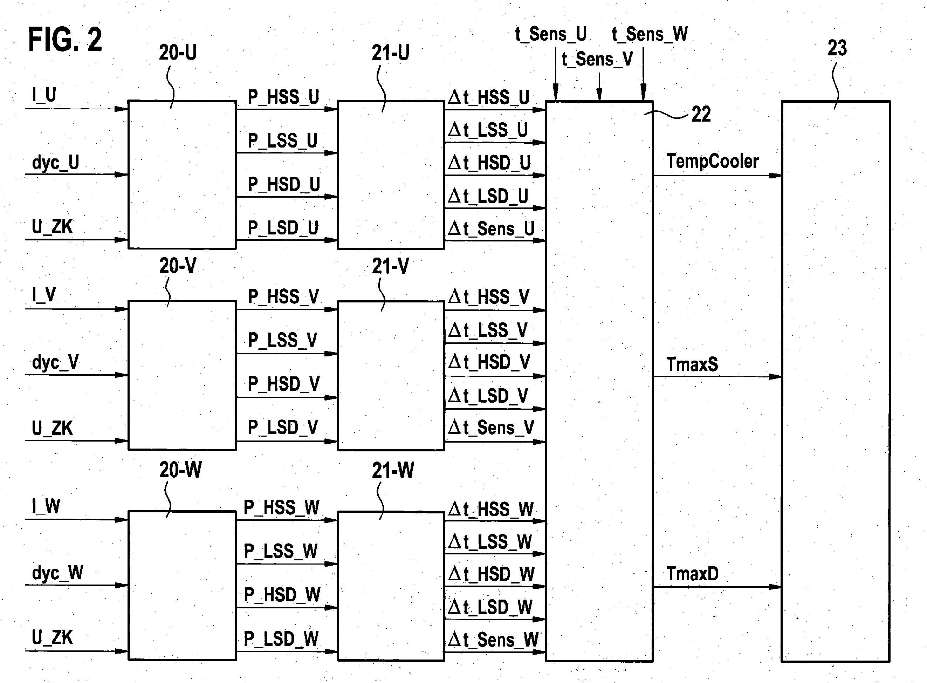

Eine Ausführungsform des erfindungsgemäßen Verfahrens wird im Folgenden anhand von Figur 2 erläutert. Dabei können die im Folgenden dargestellten Auswertungsblöcke jeweils als Berechnungseinrichtungen in einer Steuereinrichtung für den Wechselrichter 2 umfasst sein, beispielsweise in der in Fig. 1 dargestellten Steuereinheit 5. Die Auswertungsblöcke bzw. Berechnungseinrichtungen können in einer Ausführungsform zweckmäßigerweise in einer gemeinsamen Berechnungseinrichtung zusammengefasst werden.

Für jede der drei Phasen U, V, W der elektrischen Maschine und damit für jeden der Halbbrückenzweige 10-U, 10-V, 10-W des Wechselrichters 2 ist jeweils ein erster Auswertungsblock 20-U bzw. 20-V bzw. 20-W vorgesehen. Die ersten Auswertungsblöcke 20-U bzw. 20-V bzw. 20-W können in einer ersten Berechnungseinrichtung ausgestaltet sein. Den ersten Auswertungsblöcken 20-U, 20-V und 20-W werden jeweils ein aktueller Phasenstrom I_U bzw. I_V bzw. I_W, ein Tastverhältnis dyc_U bzw. dyc_V bzw. dyc_W der Leistwngs-Schaltelemente 3 des jeweiligen Halbleiterzweiges 10-U bzw. 10-V bzw. 10-W sowie eine aktuelle Spannung U_ZK am Zwischenkreiskondensator 6 zugeführt. Die Zwischenkreisspannung U_ZK charakterisiert dabei in Verbindung mit dem jeweiligen Tasterhältnis dyc eine am jeweiligen Leistungsbauelement anliegende Spannung. Aus diesen Eingangsgrößen wird in den ersten Auswertungsblöcken 20-U, 20-V und 20-W für alle Leistungsbauelemente des jeweiligen Halbbrückenzweiges 10-U bzw. 10-V bzw. 10-W, also für den High-Side-Schalter (HSS) 3a bzw. 3b bzw. 3c, den Low-Side-Schalter (LSS) 3d bzw. 3e bzw. 3f, die High-Side-Diode (HSD) 4a bzw. 4b bzw. 4c und die Low-Side-Diode (LSD) 4-d bzw. 4-e bzw. 4f, eine aktuelle Verlustleistung P berechnet.

In zweiten Auswertungsblöcken 21-U, 21-V und 21-W, welche den ersten Auswertungsblöcken 20-U bzw. 20-V bzw. 20-W nachgeschaltet sind, werden aus den Verlustleistungen P an den jeweiligen Schaltelementen 3 und Leistungsdioden 4 mit Hilfe von Übertragungsfunktionen die Temperaturhübe Δt an allen Leistungsbauelementen 3a-f und 4a-f ermittelt. Die zweiten Auswertungsblöcke 21-U, 21-V und 21-W können in einer zweiten Berechnungseinrichtung ausgestaltet sein. Zusätzlich werden aus den Verlustleistungen P an den jeweiligen Schaltelementen 3 und Leistungsdioden 4 mit Hilfe weiterer Übertragungsfunktionen Temperaturhübe Δt_Sens für die jeweiligen Temperatursensoren 13-U, 13-V und 13-W ermittelt. Dabei können für die einzelnen Leistungsbauelemente, also die Leistungs-Schaltelemente 3 sowie die Leistungsdioden 4 jeweils unterschiedliche Übertragungsfunktionen vorgesehen sein.

Einem den zweiten Auswertungsblöcken 21 nachgeschalteten dritten Auswertungsblock 22 werden alle ermittelten Temperaturhübe Δt an den Leistungsbauelementen sowie alle ermittelten Temperaturhübe Δt_Sens für die Temperatursensoren 13 zugeführt. Der dritte Auswertungsblock 22 kann beispielsweise als dritte Berechnungseinrichtung ausgestaltet sein. Dem dritten Auswertungsblock 22 werden auch die mit Hilfe der Temperatursensoren 13-U, 13-V und 13-W ermittelten Temperaturen t_Sens_U bzw. t_Sens_V bzw. t_Sens_W auf den jeweils betroffenen Halbleitermodulen 11-U bzw. 11-V bzw. 11-W zugeführt. Durch Subtraktion der ermittelten Temperaturhübe Δt_Sens für die jeweiligen Temperatursensoren 13-U, 13-V und 13-W von den durch diese Sensoren 13 jeweils gemessenen Temperaturen auf den Halbleiter-Modulen 11 wird in dem dritten Auswertungsblock 22 jeweils ein Temperaturwert für die Grundplatte 12 ermittelt. Aus diesen Temperaturwerten für die Grundplatte 12 wird dann durch Mittelwertbildung, z.B. arithmetische Mittelwertbildung, eine Temperatur TempCooler der Grundplatte 12 und damit eine Kühlertemperatur bestimmt.

Außerdem wird in dem dritten Auswertungsblock 22 aus den ermittelten Temperaturhüben Δt an den Leistungs-Schaltelementen 3 durch Maximalwertbildung ein maximaler Temperaturhub an den Leistungs-Schaltelementen 3 und aus den ermittelten Temperaturhüben Δt an den Leistungsdioden 4 durch Maximalwertbildung ein maximaler Temperaturhub an den Leistungsdioden 4 bestimmt. Durch Addition der Grundplatten-Temperatur TempCooler zu dem maximalen Temperaturhub an den Leistungs-Schaltelementen 3 wird anschließend ein Maximalwert TmaxS einer absoluten Temperatur der Leistungs-Schaltelemente 3 ermittelt. Ebenso wird durch Addition der Grundplatten-Temperatur TempCooler zu dem maximalen Temperaturhub an den Leistungsdioden 4 eine Maximalwert TmaxD einer absoluten Temperatur der Leistungsdioden 4 ermittelt. Die beiden Maximalwerte TmaxS und TmaxD werden dann gemeinsam mit der ermittelten Temperatur TempCooler der Grundplatte 12 an einen vierten Auswerteblock 23 übergeben, welcher in Abhängigkeit von diesen Größen oder auch von davon abgeleiteten Größen ein Drehmoment oder eine Leistung der elektrischen Maschine 1 festlegt. Der vierte Auswertungsblock 23 kann beispielsweise als vierte Berechnungseinrichtung ausgestaltet sein. Insbesondere wird das Drehmoment oder die Leistung der elektrischen Maschine auf einen vorgebbaren Maximalwert begrenzt, wenn die ermittelten Temperaturhübe und/oder die ermittelten absoluten Temperaturwerte vorgebbare Grenzwerte überschreiten.

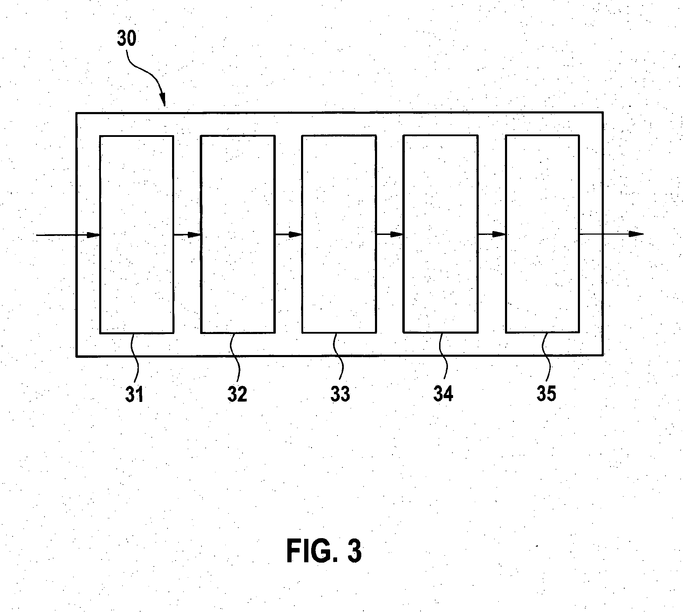

Figur 3 zeigt eine Steuereinrichtung für den Betrieb einer durch einen Wechselrichter gesteuerten n-phasigen elektrischen Maschine gemäß einer Ausführungsform. Die Steuereinrichtung 30 kann insbesondere der Steuereinheit 5 in Fig. 1 ähnlich sein. Es kann auch vorgesehen sein, dass die Steuereinrichtung 30 in der Steuereinheit 5 umfasst ist. Die Steuereinrichtung 30 kann insbesondere zur Ansteuerung des Pulswechselrichters 2 in Fig. 1 dienen und dabei die Funktionalität der im Zusammenhang mit Fig. 2 erläuterten Steuerschritte ausgestalten.

Die Steuereinrichtung 30 umfasst eine Erfassungseinrichtung 31, eine erste Berechnungseinrichtung 32, eine zweite Berechnungseinrichtung 33, eine dritte Berechnungseinrichtung 34 und eine vierte Berechnungseinrichtung 35.

Die Erfassungseinrichtung 31 ist dazu ausgelegt, zumindest für einen Drehzahlbereich einer elektrischen Maschine 1 unterhalb eines vorgebbaren Drehzahlschwellenwertes die durch die Halbbrückenzweige 10-U, 10-V, 10-W des anzusteuernden Pulswechselrichters 2 fließenden Phasenströme und die an den Leistungsbauelementen anliegenden Spannungen und Temperaturen auf den Halbleiter-Modulen 11-U, 11-V und 11-W zu ermitteln. Die erste Berechnungseinrichtung 32 ist dazu ausgelegt, aus dem an einem Leistungsbauelement jeweils fließenden Phasenstrom und der jeweils anliegenden Spannung eine Verlustleistung P für jedes der Leistungsbauelemente zu berechnen. Die zweite Berechnungseinrichtung 33 ist dazu ausgelegt, aus den Verlustleistungen P einen jeweiligen Temperaturhub Δt für jedes der Leistungsbauelemente sowie für Temperatursensoren 13-U, 13-V bzw. 13-W, welche der Ermittlung der Temperaturen auf den Halbleiter-Modulen 11-U, 11-V und 11-W dienen, zu ermitteln. Die dritte Berechnungseinrichtung 34 ist dazu ausgelegt, aus den ermittelten Temperaturen auf den Halbleiter-Modulen 11-U, 11-V und 11-W und den ermittelten Temperaturhüben an den Temperatursensoren 13-U, 13-V bzw. 13-W eine Temperatur der Grundplatte 12 zu ermitteln. Die vierte Berechnungseinrichtung 35 ist dazu ausgelegt, ein Drehmoment oder eine Leistung der elektrischen Maschine 1 in Abhängigkeit von den ermittelten Temperaturhüben Δt und der ermittelten Temperatur der Grundplatte 12 festzulegen.

## Patentansprüche

1. Verfahren zum Betrieb einer durch einen Wechselrichter (2) gesteuerten n-phasigen elektrischen Maschine (1), mit n ≥ 1, wobei der Wechselrichters (2) n Halbbrückenzweige (10-U, 10-V, 10-W) mit Leistungsbauelementen in Form von steuerbaren Leistungs-Schaltelementen (3) und dazu jeweils parallel geschalteten Leistungsdioden (4) umfasst, wobei jeder der Halbbrückenzweige (10-U; 10-V;10-W) auf einem separaten Halbleiter-Modul (11-U; 11-V; 11-W) angeordnet ist, welche gemeinsam auf einer Grundplatte (12) angeordnet sind, bei dem zumindest für einen Drehzahlbereich der elektrischen Maschine (1) unterhalb eines vorgebbaren Drehzahlschwellenwertes
- die durch die Halbbrückenzweige (10-U, 10-V, 10-W) fließenden Phasenströme (I_U, I_V, I_W), die an den Leistungs-Schaltelementen (3) anliegenden Spannungen und Temperaturen (t_Sens_U, t_Sens_V, t_Sens_W) auf den Halbleiter-Modulen (11-U, 11-V, 11-W) ermittelt werden,
- aus dem an einem Leistungs-Schaltelement (3) jeweils fließenden Strom (I_U; I_V; I_W) und der jeweils anliegenden Spannung eine Verlustleistung (P) für jedes der Leistungs-Schaltelemente (3) berechnet wird,
- aus den Verlustleistungen (P) an den jeweiligen Leistungs-Schaltelementen (3) mit Hilfe von ersten Übertragungsfunktionen Temperaturhübe (Δt) an allen Leistungs-Schaltelementen (3) ermittelt werden sowie aus den Verlustleistungen (P) an den jeweiligen Leistungs-Schaltelementen (3) mit Hilfe von zweiten Übertragungsfunktionen ein jeweiliger Temperaturhub (Δt_Sens) für Temperatursensoren (13-U, 13-V, 13-W), welche der Ermittlung der Temperaturen auf den Halbleiter-Modulen (11-u, 11-V, 11-W) dienen, ermittelt wird, wobei auch die thermischen Abhängigkeiten zwischen den Leistungschaltelement (3) und den Temperatursensoren anhand einer Übertragunsfunktion berücksichtigt werden;
- aus den ermittelten Temperaturen (t_Sens_U, t_Sens_V, t_Sens_W) auf den Halbleiter-Modulen (11-U, 11-V, 11-W) und den ermittelten Temperaturhüben (Δt_Sens) an den Temperatursensoren (13-U, 13-V, 13-W) eine Temperatur (TempCooler) der Grundplatte (12) ermittelt wird, und
- ein Drehmoment oder eine Leistung der elektrischen Maschine (1) in Abhängigkeit von den ermittelten Temperaturhüben (Δt) an allen Leistungs-Schaltelementen (3) und der ermittelten Temperatur (TempCooler) der Grundplatte (12) festgelegt wird.

2. Verfahren nach Anspruch 1, wobei aus den ermittelten Temperaturhüben (Δt) an den Leistungs-Schaltelementen (3) ein maximaler Temperaturhub an den Leistungs-Schaltelementen (3) ermittelt wird, aus den ermittelten Temperaturhüben (Δt) an den Leistungsdioden (4) ein maximaler Temperaturhub an den Leistungsdioden (4) ermittelt wird und das Drehmoment oder die Leistung der elektrischen Maschine (1) in Abhängigkeit von den ermittelten maximalen Temperaturhüben (Δt) an den Leistungs-Schaltelementen (3) und den Leistungsdioden (4) festgelegt wird.

3. Verfahren nach Anspruch 2, wobei aus der ermittelten Temperatur der Grundplatte (12) und den ermittelten maximalen Temperaturhüben (Δt) an den Leistungs-Schaltelementen (3) und den Leistungsdioden (4) ein Maximalwert (TmaxS) einer absoluten Temperatur der Leistungs-Schaltelemente (3) bzw. ein Maximalwert (TmaxD) einer absoluten Temperatur der Leistungsdioden (4) ermittelf wird und das Drehmoment oder die Leistung der elektrischen Maschine (1) in Abhängigkeit von den gebildeten Maximalwerten (TmaxS; TmaxD) für die Leistungs-Schaltelemente (3) und für die Leistungsdioden (4) festgelegt wird.

4. Verfahren nach einem der Ansprüche 1 bis 3, wobei zur Ermittlung der Temperatur (TempCooler) der Grundplatte (12)
- der für den Temperatursensor (13) auf einem Halbleitermodul (11) ermittelte Temperaturhub (Δt_Sens) von der durch den Temperatursensor (13) auf dem Halbleitermodul (11) erfassten Temperatur (t_Sens) subtrahiert wird, und
- aus den auf diese Weise ermittelten Temperaturwerten durch Mittelwertbildung die Temperatur (TempCooler) der Grundplatte (12) ermittelt wird.

5. Verfahren nach einem der vorhergehenden Ansprüche, wobei der Temperaturhub (Δt_Sens) an einem Temperatursensor (13) auf einem Halbleitermodul (11) aus der Verlustleistung (P) zumindest eines Leistungs-Schaltelementes (3) auf diesem Halbleitermodul (11) mit Hilfe mindestens einer Übertragungsfunktion ermittelt wird.

6. Verfahren nach Anspruch 5, wobei nur die Verlustleistungen (P) derjenigen Leistungs-Schaltelemente (3) berücksichtigt werden, welche einen thermischen Einfluss auf den Temperatursensor (13) haben.

7. Verfahren nach einem der Ansprüche 5 oder 6, wobei aus den Verlustleistungen (P) der einzelnen Leistungs-Schaltelemente (3) mit Hilfe jeweils zugeordneter und voneinander verschiedener Übertragungsfunktionen jeweils Temperaturhub-Anteile ermittelt werden und der Temperaturhub (Δt_Sens) an einem Temperatursensor (13) durch Summenbildung der einzelnen Temperaturhub-Anteile ermittelt wird.

8. Verfahren nach einem der Ansprüche 2 bis 7, wobei das Drehmoment oder die Leistung der elektrischen Maschine (1) auf einen vörgebbaren Maximalwert begrenzt wird, wenn die ermittelten Temperaturhübe (Δt) und/oder die ermittelten absoluten Temperaturwerte vorgebbare Grenzwerte überschreiten.

9. Steuereinrichtung (30) für den Betrieb einer durch einen Wechselrichter (2) gesteuerten n-phasigen elektrischen Maschine (1), mit n ≥ 1, wobei der Wechselrichter (2) n Halbbrückenzweige (10-U, 10-V, 10-W) mit Leistungsbauelementen in Form von steuerbaren Leistungs-Schaltelementen (3) und dazu jeweils parallel geschalteten Leistungsdioden (4) umfasst, wobei jeder der Halbbrückenzweige (10-U; 10-V; 10-W) auf einem separaten Halbleiter-Modul (11-U; 11-V; 11-W) angeordnet ist, welche gemeinsam auf einer Grundplatte (12) angeordnet sind, mit:
einer Erfassungseinrichtung (31), welche dazu ausgelegt ist, zumindest für einen Drehzahlbereich der elektrischen Maschine (1) unterhalb eines vorgebbaren Drehzahlschwellenwertes die durch die Halbbrückenzweige (10-U, 10-V, 10-W) fließenden Phasenströme (I_U, I_V, I_W) und die an den Leistungs-Schaltelementen (3) anliegenden Spannungen und Temperaturen (t_Sens_U, t_Sens_V, t_Sens_W) auf den Halbleiter-Modulen (11-U, 11-V, 11-W) zu ermitteln;
einer ersten Berechnungseinrichtung (32), welche dazu ausgelegt ist, aus dem an einem Leistungs-Schaltelement (3) jeweils fließenden Phasenstrom (I_U; I_V; I_W) und der jeweils anliegenden Spannung eine Verlustleistung (P) für jedes der Leistungs-Schaltelemente (3) zu berechnen;
einer zweiten Berechnungseinrichtung (33), welche dazu ausgelegt ist, aus den Verlustleistungen (P) an den jeweiligen Leistungs-Schaltelementen (3) mit Hilfe von ersten Übertragungsfunktionen Temperaturhübe (Δt) an allen Leistungs-Schaltelementen (3) zu ermitteln sowie aus den Verlustleistungen (P) an den jeweiligen Leistungs-Schaltelementen (3) mit Hilfe von zweiten Übertragungsfunktionen einen jeweiligen Temperaturhub (Δt_Sens)für Temperatursensoren (13-U, 13-V, 13-W), welche der Ermittlung der Temperaturen auf den Halbleiter-Modulen (11-U, 11-V, 11-W) dienen, zu ermitteln, wobei auch die thermischen Abhängigkeiten zwischen den Leistungschaltelement (3) und den Temperatursensoren anhand einer Übertragunsfunktion berücksichtigt werden;
einer dritten Berechnungseinrichtung (34), welche dazu ausgelegt ist, aus den ermittelten Temperaturen (t_Sens_U, t_Sens_V, t_Sens_W) auf den Halbleiter-Modulen (11-U, 11-V, 11-W) und den ermittelten Temperaturhüben (Δt_Sens) an den Temperatursensoren (13-U, 13-V, 13-W) eine Temperatur (TempCooler) der Grundplatte (12) zu ermitteln; und
einer vierten Berechnungseinrichtung (35), welche dazu ausgelegt ist, ein Drehmoment oder eine Leistung der elektrischen Maschine (1) in Abhängigkeit von den ermittelten Temperaturhüben (Δt) an allen Leistungs-Schaltelementen (3) und der ermittelten Temperatur (TempCooler) der Grundplatte (12) festzulegen.

10. System, mit:
einer Steuereinrichtung (30) nach Anspruch 9;
einem Wechselrichter (2) mit n Halbbrückenzweigen (10-U, 10-V, 10-W) mit Leistungsbauelementen in Form von steuerbaren Leistungs-Schaltelementen (3) und dazu jeweils parallel geschalteten Leistungsdioden (4), wobei jeder der Halbbrückenzweige (10-U; 10-V; 10-W) auf einem separaten Halbleiter-Modul (11-U; 11-V; 11-W) angeordnet ist, welche gemeinsam auf einer Grundplatte (12) angeordnet sind; und
einer durch den Wechselrichters (2) gesteuerten n-phasigen elektrischen Maschine (1), mit n ≥ 1.

## Claims

1. Method for operating an n-phase electrical machine (1), where n ≥ 1, controlled by an inverter (2), wherein the inverter (2) comprises n half-bridge branches (10-U, 10-V, 10-W) having power components in the form of controllable power switching elements (3) and power diodes (4) respectively connected in parallel therewith, wherein each of the half-bridge branches (10-U; 10-V; 10-W) is arranged on a separate semiconductor module (11-U; 11-V; 11-W), which are arranged jointly on a baseplate (12), wherein, at least for a rotational speed range of the electrical machine (1) below a predefinable rotational speed threshold value,
- the phase currents (I_U, I_V, I_W) flowing through the half-bridge branches (10-U, 10-V, 10-W), the voltages and temperatures (t_Sens_U, t_Sens-V, t_Sens_W) present at the power switching elements (3) on the semiconductor modules (11-U, 11-V, 11-W) are determined,
- from the current (I_U; I_V; I_W) respectively flowing at a power switching element (3) and from the voltage respectively present, a power loss (P) is calculated for each of the power switching elements (3),
- from the power losses (P) at the respective power switching elements (3) temperature swings (Δt) at all the power switching elements (3) are determined with the aid of first transfer functions and from the power losses (P) at the respective power switching elements (3) a respective temperature swing (Δt_Sens) is determined with the aid of second transfer functions for temperature sensors (13-U, 13-V, 13-W) serving to determine the temperatures on the semiconductor modules (11-U, 11-V, 11-W), wherein the thermal dependencies between the power switching elements (3) and the temperature sensors are also taken into account on the basis of a transfer function;
- a temperature (TempCooler) of the baseplate (12) is determined from the determined temperatures (t_Sens_U, t_Sens_V, t_Sens_W) on the semiconductor modules (11-U, 11-V, 11-W) and the determined temperature swings (Δt_Sens) at the temperature sensors (13-U, 13-V, 13-W), and
- a torque or a power of the electrical machine (1) is established in a manner dependent on the determined temperature swings (Δt) at all the power switching elements (3) and the determined temperature (TempCooler) of the baseplate (12).

2. Method according to Claim 1, wherein a maximum temperature swing at the power switching elements (3) is determined from the determined temperature swings (Δt) at the power switching elements (3), a maximum temperature swing at the power diodes (4) is determined from the determined temperature swings (Δt) at the power diodes (4), and the torque or the power of the electrical machine (1) is established in a manner dependent on the determined maximum temperature swings (Δt) at the power switching elements (3) and the power diodes (4).

3. Method according to Claim 2, wherein, from the determined temperature of the baseplate (12) and the determined maximum temperature swings (Δt) at the power switching elements (3) and the power diodes (4), a maximum value (TmaxS) of an absolute temperature of the power switching elements (3) and, respectively, a maximum value (TmaxD) of an absolute temperature of the power diodes (4) are determined, and the torque or the power of the electrical machine (1) is established in a manner dependent on the maximum values (TmaxS; TmaxD) formed for the power switching elements (3) and for the power diodes (4).

4. Method according to any of Claims 1 to 3, wherein, for determining the temperature (TempCooler) of the baseplate (12),
- the temperature swing (Δt_Sens) determined for the temperature sensor (13) on a semiconductor module (11) is subtracted from the temperature (t_Sens) detected by the temperature sensor (13) on the semiconductor module (11), and
- the temperature (TempCooler) of the baseplate (12) is determined by averaging from the temperature values determined in this way.

5. Method according to any of the preceding claims, wherein the temperature swing (Δt_Sens) at a temperature sensor (13) on a semiconductor module (11) is determined from the power loss (P) of at least one power switching element (3) on said semiconductor module (11) with the aid of at least one transfer function.

6. Method according to Claim 5, wherein only the power losses (P) of those power switching elements (3) which have a thermal influence on the temperature sensor (13) are taken into account.

7. Method according to either of Claims 5 and 6, wherein, from the power losses (P) of the individual power switching elements (3), with the aid of respectively assigned and mutually different transfer functions, temperature swing portions are in each case determined and the temperature swing (Δt_Sens) at a temperature sensor (13) is determined by summation of the individual temperature swing portions.

8. Method according to any of Claims 2 to 7, wherein the torque or the power of the electrical machine (1) is limited to a predefinable maximum value if the determined temperature swings (Δt) and/or the determined absolute temperature values exceed predefinable limit values.

9. Control device (30) for operating an n-phase electrical machine (1), where n ≥ 1, controlled by an inverter (2), wherein the inverter (2) comprises n half-bridge branches (10-U, 10-V, 10-W) having power components in the form of controllable power switching elements (3) and power diodes (4) respectively connected in parallel therewith, wherein each of the half-bridge branches (10-U; 10-V; 10-W) is arranged on a separate semiconductor module (11-U; 11-V; 11-W), which are arranged jointly on a baseplate (12), comprising:
a detection device (31), which is designed to determine, at least for a rotational speed range of the electrical machine (1) below a predefinable rotational speed threshold value, the phase currents (I_U, I_V, I_W) flowing through the half-bridge branches (10-U, 10-V, 10-W) and the voltages and temperatures (t_Sens_U, t_Sens_V, t_Sens_W) present at the power switching elements (3) on the semiconductor modules (11-U, 11-V, 11-W);
a first calculation device (32), which is designed to calculate, from the phase current (I_U; I_V; I_W) respectively flowing at a power switching element (3) and from the voltage respectively present, a power loss (P) for each of the power switching elements (3);
a second calculation device (33), which is designed to determine from the power losses (P) at the respective power switching elements (3) temperature swings (Δt) at all the power switching elements (3) are with the aid of first transfer functions and to determine from the power losses (P) at the respective power switching elements (3) a respective temperature swing (Δt_Sens) with the aid of second transfer functions for temperature sensors (13-U, 13-V, 13-W) serving to determine the temperatures on the semiconductor modules (11-U, 11-V, 11-W), wherein the thermal dependencies between the power switching elements (3) and the temperature sensors are also taken into account on the basis of a transfer function;
a third calculation device (34), which is designed to determine a temperature (TempCooler) of the baseplate (12) from the determined temperatures (t_Sens_U, t_Sens_V, t_Sens_W) on the semiconductor modules (11-U, 11-V, 11-W) and the determined temperature swings (Δt_Sens) at the temperature sensors (13-U, 13-V, 13-W); and
a fourth calculation device (35), which is designed to establish a torque or a power of the electrical machine (1) in a manner dependent on the determined temperature swings Δt) at all the power switching elements (3) and the determined temperature (TempCooler) of the baseplate (12).

10. System, comprising:
a control device (30) according to Claim 9;
an inverter (2) having n half-bridge branches (10-U, 10-V, 10-W) having power components in the form of controllable power switching elements (3) and power diodes (4) respectively connected in parallel therewith, wherein each of the half-bridge branches (10-U; 10-V; 10-W) is arranged on a separate semiconductor module (11-U; 11-V; 11-W), which are arranged jointly on a baseplate (12); and
an n-phase electrical machine (1), where n ≥ 1, controlled by the inverter (2).

## Revendications

1. Procédé de fonctionnement d'une machine électrique (1) commandée par un onduleur (2), avec n ≥ 1, pour lequel l'onduleur (2) comprend n branches de demi-pont (10-U,10-V,10-W) avec des composants de puissance sous la forme d'éléments commutateurs de puissance pilotables (3) et de diodes de puissance (4) respectivement montées en parallèle de ces derniers, pour lequel chacune des branches de demi-pont (10-U,10-V,10-W) est disposée sur un module semi-conducteur séparé (11-U, 11-V, 11-W), lesquels sont disposés en commun sur une plaque de base (12), pour lequel au moins pour une gamme de vitesses de rotation de la machine électrique (1) inférieure à une valeur seuil de vitesse de rotation prédéfinissable,
- sont déterminés sur les modules semi-conducteurs (11_U, 11_V, 11_W) les courants de phase (I_U, I_V,I_W) s'écoulant à travers les branches de demi-pont (10-U,10-V,10-W), les tensions et températures (t-Sens_U, t_Sens_V, t_Sens_W) appliquées sur les éléments commutateurs de puissance (3),
- est calculée à partir du courant (I_U, I_V,I_W) parcourant respectivement un composant commutateur de puissance (3) et de la tension respectivement appliquée, une puissance dissipée (P) pour chacun des éléments commutateurs de puissance (3),
- sont déterminées à partir des puissances dissipées (P) sur les éléments commutateurs de puissance (3) respectifs, à l'aide des premières fonctions de transmission, des excursions thermiques (Δt) sur tous les éléments commutateurs de puissance (3) ainsi qu'est déterminée à partir des puissances dissipées (P) sur les éléments commutateurs de puissance (3) à l'aide des deuxièmes fonctions de transmission, une excursion thermique respective (Δt_Sens) pour des capteurs thermiques (13_U,13_V,13_W) servant à la détermination des températures sur les modules semi-conducteurs (11_U,11_V,11_W), pour lequel également les fonctions thermiques entre les éléments commutateurs de puissance (3) et les capteurs thermiques sont prises en considération à l'aide d'une fonction de transmission,
- est déterminée une température (TempCooler) de la plaque de base (12) à partir des températures déterminées (t_Sens_U, t_Sens_V, t_Sens_W) sur les modules semi-conducteurs (11_U,11_V,11_W) et des excursions thermiques déterminées (Δt_Sens) sur les capteurs thermiques (13-U, 13-V,13-W), et
- est fixé un couple ou une puissance de la machine électrique (1) en fonction des excursions thermiques déterminées (Δt) sur tous les éléments commutateurs de puissance (3) et de la température déterminée (TempCooler) de la plaque de base (12).

2. Procédé selon la revendication 1, pour lequel une excursion thermique maximale sur les éléments commutateurs de puissance (3) est déterminée à partir des excursions thermiques déterminées (Δt) sur les éléments commutateurs de puissance (3), une excursion thermique maximale sur les diodes de puissance (4) est déterminée à partir des excursions thermiques déterminées (Δt) sur les diodes de puissance (4) et le couple ou la puissance de la machine électrique (1) est fixé en fonction des excursions thermiques maximales déterminées (Δt) sur les éléments commutateurs de puissance (3) et les diodes de puissance (4).

3. Procédé selon la revendication 2, pour lequel une valeur maximale (TmaxS) d'une température absolue des éléments commutateurs de puissance (3) ou une valeur maximale (TmaxD) d'une température absolue des diodes de puissance (4) est déterminée à partir de la température déterminée de la plaque de base (12) et des excursions thermiquess (Δt) maximales déterminées sur les éléments commutateurs de puissance (3) et les diodes de puissance (4) et le, couple ou la puissance de la machine électrique (1) est fixé en fonction des valeurs maximales formées (TmaxS;TmaxD) pour les éléments commutateurs de puissance (3) et pour les diodes de puissance (4).

4. Procédé selon l'une quelconque des revendications 1 à 3 pour lequel pour déterminer la température (TempCooler) de la plaque de base (12)
- l'excursion thermique (Δt_Sens) déterminée pour le capteur thermique (13) sur un module semi-conducteur (11) est soustraite de la température (t_Sens) saisie par le capteur thermique (13) sur le module semi-conducteur (11) et
- la température (TempCooler) de la plaque de base (12) est déterminée par établissement de la moyenne à partir des valeurs de température déterminées de cette manière.

5. Procédé selon l'une quelconque des revendications précédentes, pour lequel l'excursion thermique (Δt_Sens) sur un capteur thermique (13) sur un module semi-conducteur (11) est déterminée à partir de la puissance dissipée (P) au moins d'un élément commutateur de puissance (3) sur ce module semi-conducteur (11) à l'aide d'une fonction de transmission.

6. Procédé selon la revendication 5, pour lequel seules sont prises en considération les puissances dissipées (P) des éléments commutateurs de puissance (3) qui ont un effet thermique sur le capteur thermique (13).

7. Procédé selon l'une quelconque des revendications 5 ou 6, pour lequel des parties d'excursion thermique sont respectivement déterminées à partir des puissances dissipées (P) des éléments commutateurs de puissance (3) individuels à l'aide de fonctions de transmission respectivement affectées et différentes les unes des autres et l'excursion thermique (Δt_Sens) sur un capteur thermique (13) est déterminée par totalisation des parties d'excursion thermique individuelles.

8. Procédé selon l'une quelconque des revendications 2 à 7, pour lequel le couple ou la puissance de la machine électrique (1) est limité à une valeur maximale préalablement définissable, si les excursions thermiques (Δt) déterminées et/ou les valeurs de température déterminées dépassent des valeurs limites préalablement définissables.

9. Dispositif de commande (30) de fonctionnement d'une machine électrique (1) à n phases, commandée par un onduleur (2), avec n ≥ 1, pour lequel l'onduleur (2) comprend n branches de demi-pont (10-U,10-V,10-W) avec des composants de puissance sous la forme d'éléments commutateurs de puissance (3) pilotables et de diodes de puissance (4) respectivement montées en parallèle à cet effet, pour lequel chacune des branches de demi-pont (10-U,10-V,10-W) est disposée sur un module semi-conducteur séparé (11-U, 11-V,11-W), lesquels sont disposés en commun sur une plaque de base (12), avec :
un dispositif de saisie (31), lequel est conçu à cet effet pour déterminer au moins pour une gamme de vitesses de rotation de la machine électrique (1) en-dessous d'une valeur seuil de vitesse de rotation préalablement définissable, les courants de phase (I_U, I_V,I_W) traversant les branches de demi-pont (10-U,10-V,10-W) et les tensions et températures (t-Sens_U, t_Sens_V, t_Sens_W) sur les modules de semi-conducteurs (11-U, 11_V,11_W), appliquées aux éléments commutateurs de puissance (3),
un premier dispositif de calcul (32), lequel est conçu à cet effet pour calculer à partir du courant de phase (I_U, I_V, I_W) parcourant respectivement un élément commutateur de puissance (3) et de la tension respectivement appliquée, une puissance dissipée (P) pour chacun des éléments commutateurs de puissance (3),
un deuxième dispositif de calcul (33), lequel est conçu à cet effet pour déterminer des excursions thermiques (Δt) sur tous les éléments commutateurs de puissance (3) à partir des puissances dissipées (P) sur les éléments commutateurs de puissance (3) respectifs à l'aide des premières fonctions de transmission ainsi que de déterminer à partir des puissances dissipées (P) sur les éléments commutateurs de puissance (3) à l'aide des deuxièmes fonctions de transmission, une excursion thermique (Δt_Sens) respective pour les capteurs thermiques (13-U,13-V,13-W), lesquels servent à la détermination des températures sur les modules de semi-conducteurs (11-U,11-V,11-W), pour lequel également les fonctions thermiques entre les éléments commutateurs de puissance (3) et les capteurs thermiques sont prises en considération à l'aide d'une fonction de transmission,
un troisième dispositif de calcul (34), lequel est conçu à cet effet pour déterminer une température (TempCooler) de la plaque de base (12) à partir des températures déterminées (t_Sens_U, t_Sens_V, t_Sens_W) sur les modules de semi-conducteurs (11-U,11-V,11-W) et des excursions thermiquess (Δt_Sens) déterminées sur les capteurs thermiques (13-U, 13-V,13-W), et
un quatrième dispositif de calcul (35), lequel est conçu pour fixer un couple ou une puissance de la machine électrique (1) en fonction des excursions thermiques déterminées (Δt) sur tous les éléments commutateurs de puissance (3) et de la température déterminée (TempCooler) de la plaque de base (12).

10. Système avec
un dispositif de commande (30) selon la revendication 9,
un onduleur (2) avec n branches de demi-pont (10-U,10-V,10-W) avec des composants de puissance sous la forme d'éléments commutateurs de puissance (3) pilotables et de diodes de puissance (4) respectivement montées en parallèle à cet effet, pour lequel chacune des branches de demi-pont (10-U,10-V,10-W) est disposée sur un module semi-conducteur séparé (11-U,11-V,11-W), lesquels sont disposés en commun sur une plaque de base (12), et
une machine électrique (1) à n phases, commandée par l'onduleur (2), avec ≥ 1.
